# EUROPEAN PATENT APPLICATION

(11) **EP 1 376 137 A2**
(43) Date of publication of application: **02.01.2004**
(21) Application number: 03014184.0
(22) Date of filing: 24.06.2003
(51) Int. Cl.: G01N 35/02

(54) **Automatic analyzer**

(30) Priority: 28.06.2002 JP 2002189016
(71) Applicant: Hitachi High-Technologies Corporation, Tokyo 105-8717 (JP)
(72) Inventor: Matsubara, Shigeki, Hitachi High-Technologies Corp, Tokyo 105-8717 (JP); Tamura, Terumi, Hitachi High-Technologies Corp., Tokyo 105-8717 (JP); Imai, Kyoko, Hitachi High-Technologies Corporation, Tokyo 105-8717 (JP); Mimura, Tomonori, Hitachi High-Technologies Corp., Tokyo 105-8717 (JP)
(74) Representative: Strehl Schübel-Hopf & Partner

(57) **Abstract**

An automatic analyzer includes a sample introduction section, a conveying section, and a plurality of analysis units. In this automatic analyzer, when one or more analysis units suffer failures, it is possible to set the aforementioned analysis units to a power-off enable mode from the screen of an operation section. The analysis unit that has been set to the power-off enable mode becomes separated from the analyzer system operation and the information network in the analyzer system, whereby an analysis operation of the entire analyzer system is allowed to be continued, with the individual power source for the above-described analysis unit turned off.

## Description

### BACKGROUND OF THE INVENTION

### 1. Field of the Invention

The present invention relates to an automatic analyzer performing quantitative and qualitative analyses of ingredients of biological fluids such as blood and urine. More particularly, the present invention pertains to an automatic analyzer in which a plurality of analysis units is connected to a conveying line.

### 2. Description of the Related Art

The automatic analyzer for clinical examination (hereinafter simply referred to as an "automatic analyzer") that automatically analyzes, in a quantitative or qualitative manner, ingredients included in biological samples such as blood and urine of patient origin, has been predominantly introduced into large hospitals and medical laboratories that perform analyses of biological samples. In recent years, in order to meet the needs for the diversification of analysis items, and the speedup of analysis, an automatic analyzer has been proposed in which a plurality of analysis units is combined on a single conveying line, and in which a sample rack loaded with samples to be analyzed is conveyed to the analysis unit via a conveying line (hereinafter, this type of automatic analyzer is referred to as a "module type automatic analyzer").

In this module type automatic analyzer, there may be a case where, out of the plurality of analysis units connected to the conveying line, some analysis unit becomes incapable of continuing an analysis because of lack of reagents, or the like. In such a case, the sample rack is kept from being conveyed to the aforementioned analysis unit, that is, "masking" is performed. A method in which the lacked reagent for the analysis unit is replaced during the masking, and in which the masking is released after the reagent replacement, is disclosed in JP- A 2000-28622.

### SUMMARY OF THE INVENTION

However, when one of the analysis units connected to the conveying line suffers a heavy failure, a case is assumed where, in order to remedy the failure, it is necessary to turn off the power source for the aforementioned analysis unit before performing a maintenance operation such as component replacement. However, the JP-A 2000-28622 does not assume such a case. In this case, therefore, when attempting to turn off the power source for the analysis unit, the power source for the entirety of the module type automatic analyzer would have to be turned off. This is because, even when one analysis unit is subjected to masking, as a general rule, the analysis unit is not separated from the information network of a control computer that has control over the entire automatic analyzer, in order to quickly return the analysis unit to the system of the automatic analyzer after the reagent replacement. It is, therefore, assumed that, when only the power source of the failed analysis unit is turned off, the entire automatic analyzer is caused to stop its operation by an alarm.

Accordingly, it is an object of the present invention to provide an automatic analyzer that, even when an analysis unit thereof connected to the conveying line suffers a failure or the like and thereby the power source for the analysis unit must be turn off, analysis operations using other analysis units can be continued without the need to turn off the power source for the entire automatic analyzer.

To achieve the above-described object, the present invention provides an automatic analyzer that includes a conveying line for conveying a sample supplied from a sample introduction section; at least one analysis unit for analyzing the sample conveyed by the conveying line; a sample storage section for storing the sample analyzed by the analysis unit; and a central control device for comprehensively controlling the sample introduction section, the conveying line, the analysis unit, and the sample storage section. In this automatic analyzer, the central control device has a separation unit for separating the analysis unit from the control of the central control device.

The automatic analyzer targeted for the present invention is not a system in which its conveying line, analysis units and the like each has a control device, and in which these control devices independently control the respective constitutions while exchanging information thereamong. The automatic analyzer targeted for the present invention is an automatic analyzer in which a single central control computer exerts control over all constitutions (even if each of the constitutions has a control device, the single computer provides an instruction of operation with respect to each of the constitutions and performs the reception of the result of the operation). Samples supplied from the sample introduction section may be in the form of one sample rack in which a plurality of sample containers each containing one sample is mounted, or alternatively, a sample may be in the form of one sample container containing one sample. The conveying line may be something like a belt conveyer, or alternatively, it may be one that pushes out the sample container by using something like a pushing-out claw. The analysis unit may have a mechanism that takes a sample from the sample container on the conveying line, or alternatively, it may be configured so that the sample container is withdrawn into the analysis unit to thereby take a sample from the withdrawn sample container.

### BRIEF DESCRIPTION OF THE DRAWINGS

Fig. 1 is an overall schematic constructional diagram of an automatic analyzer according to an embodiment of the present invention;
Fig. 2 is a schematic constructional diagram of an analysis unit in the automatic analyzer according to the present invention; and
Fig. 3 is a setting screen of analysis units in the automatic analyzer according to the present invention.

### DESCRIPTION OF THE PREFERRED EMBODIMENTS

Hereinafter, the embodiment according to the present invention will be described with reference to the accompanying drawings.

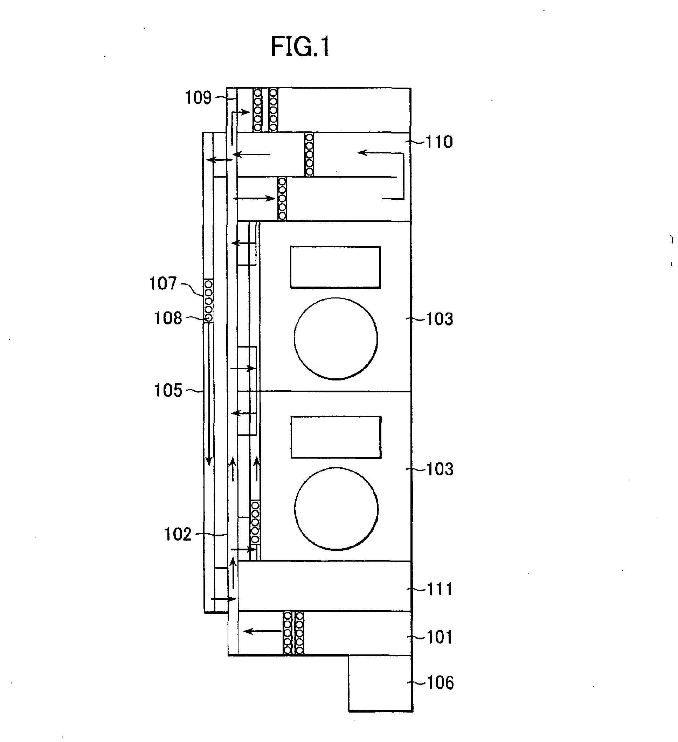

Fig. 1 is an overall schematic constructional diagram of an automatic analyzer according to an embodiment of the present invention.

Referring to Fig. 1, there is provided a conveying section 102 that conveys a rack from a sample introduction section 101 that can contain a plurality of racks 107 each capable of accommodating a plurality of sample containers 108. A plurality of analysis units 103 is disposed adjacent to the conveying section 102. Besides the conveying section 102, there is provided a reexamination conveying section 105 that conveys a rack 107 accommodating sample containers 108 each contains a sample to be reexamined, to the analysis unit. Also, there is provided an operation section 106 that performs an operation with respect to each of the analysis units . Here, each of the analysis units 103 has a sample distributing mechanism, and the conveying section 102 conveys the sample containers 108 mounted on the rack 107 to a sample sucking position for each of the analysis units.

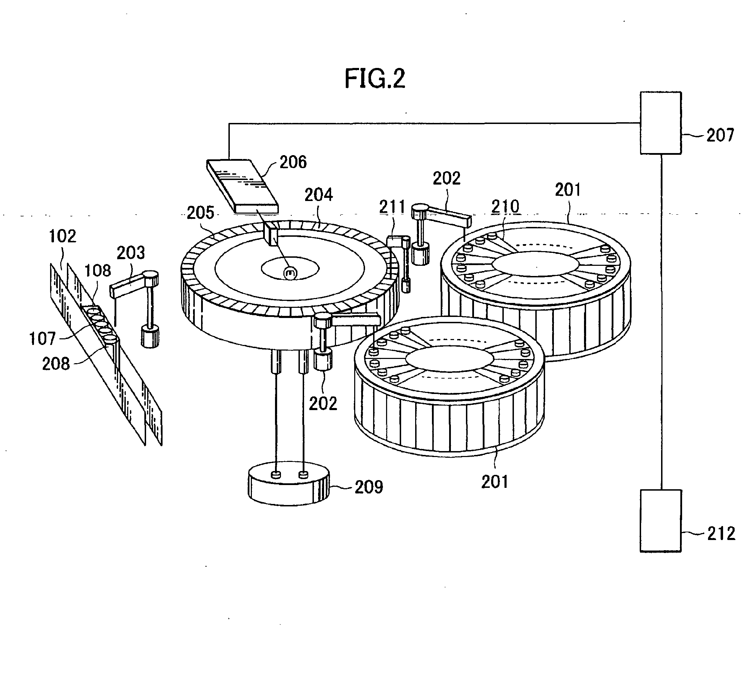

Fig. 2 shows the construction of the analysis unit 103 shown in Fig.1. Referring to Fig. 2, the analysis unit 103 comprises a reagent system including reagent disks 201 each serving as a reagent container accommodating section, and reagent distributing pipetters 202; a sample system including a reagent distributing pipetter 203; a reaction system including a reaction disk 205 having a reaction container 204; and a measuring system including a multi-wavelength photometer 206 and an analog/digital converter 207.

In Fig. 2, the rack 107 accommodating the sample containers 108 is conveyed to the sample sucking position 208 through the conveying section 102. The sample distributing pipetter 203 sucks a sample in the sample containers 108, and distributes it into the reaction container 204 by a predetermined amount.

The reaction container 204 including a sample liquid ejected and distributed to the container is moved to a first reagent addition position through the reaction disk 205 communicated with a constant temperature bath 209 . At this time, the reagent disk 201 is also moved, by a rotational movement, so that the sample container 210 corresponding to a current analysis item becomes positioned underneath the reagent distributing pipetter 202 held by a hoisting/lowering arm. A predetermined first reagent sucked by the reagent distributing pipetter 202 is added to the reaction container 204 moved up to the first reagent addition position. The reaction container 204 with the first reagent added, is moved up to the position of a stirrer 211, and there subjected to a first stir.

A light flux emitted from a light source passes through the reaction container 204 of which the contents have been stirred, and is made incident on the multi-wavelength photometer 206. Thereby, the absorbance of a reaction liquid, which is the contents of the reaction container 204, is detected by the multi-wavelength photometer 206. The detected absorbance signal is supplied to a computer 212 through the analog/digital converter 207 and an interface, and is converted into the concentration of an analysis item of a measurement object in the sample liquid.

The reaction container 204 in which the measurement has been completed, is moved up to the position of a washing mechanism, and after liquids inside the reaction container 204 are drained at the washing position of a reaction container washing mechanism, the reaction container 204 is washed with water, thereby getting ready for the next analysis.

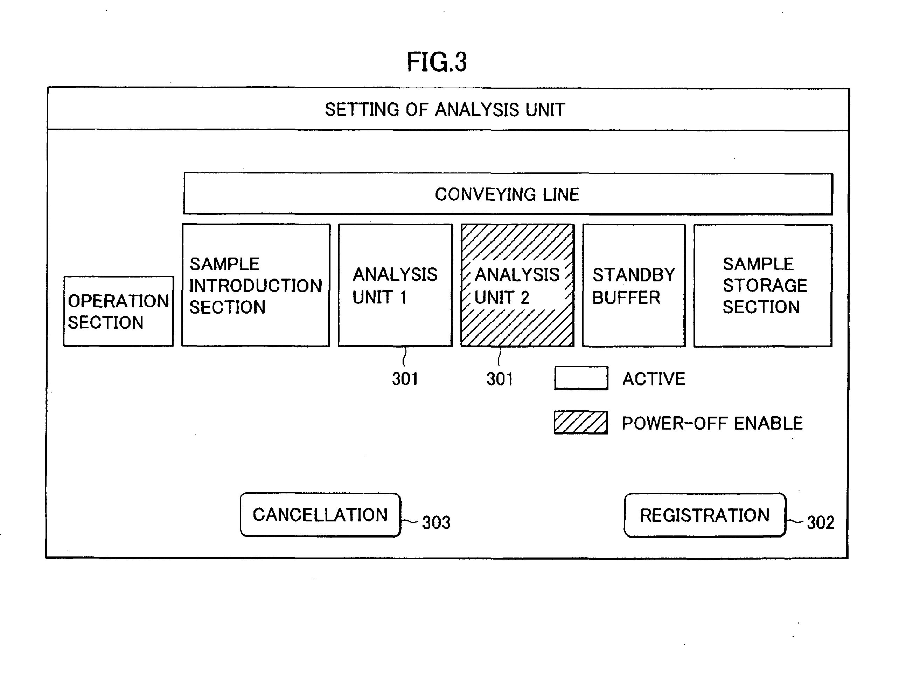

In the automatic analyzer shown in Fig. 1, when one analysis unit suffers any failure during an analysis operation, the analysis unit stops its operation and enters a standby state with the entire analyzer system continuing the analysis operation. When the entire analyzer system enters a standby state after the analysis operation of the entire system has been finished, an operator can set the above-described analysis unit to a power-off enable mode from an operation screen. Fig. 3 shows a mode setting screen for the analysis unit. By pressing an analysis unit button 301 on the analysis unit setting screen, the mode of the analysis unit is switched between an active mode and the power-off enable mode. After having set the mode of the analysis unit on the screen, by pressing a register button 302, the setting is registered. On the other hand, after having set the mode of the analysis unit, by pressing a chancel button 303, the setting is cancelled. The analysis unit that has been set to the power-off enable mode keeps on being softwarewise separated from the information network of the entire analyzer system until the mode is switched from the power-off enable mode to the active mode. With regard to the analysis unit that has been set to the power-off enable mode, it is possible to shut off the power supply only to the above-described analysis unit by the power-off switch for the above-described analysis unit, with the power supply to the entire analyzer system continued. This state allows a maintenance operation such as component replacement or the like to be performed. As for the entire analyzer system, it is possible to restart its analysis operation in a state where the power supply to the above-described analyzer unit is shut off.

In the situation in which the entire analyzer system is on standby, when the analysis unit that has been set to the power-off enable mode and that is in a powered-off state is again powered on, system software is loaded into the above-described analyzer unit and the analyzer unit again returns into an operable state. Here, the operator can release the power-off enable mode of the above-described analyzer unit and set the analyzer unit to a service mode. The analyzer unit that has been set to the service mode is in a state separated from the operation of the entire analyzer system, and although it is connected to the information network, it cannot be subjected to an operation such as an analysis operation, a maintenance operation, or the like from the operation screen of the system. In this state, it is possible to connect an operation computer for maintenance service to the information network of the analyzer system, and perform an operation such as an adjustment and a maintenance operation, or the like with respect to the above-described analysis unit by the operation computer for maintenance service. With the above-described analysis unit being in the service mode, the analysis operation of the entire analyzer system is practicable. Also, while continuing the analysis operation of the entire analyzer system, it is possible to release the service mode of the above-described analysis unit and return the analysis unit to the analysis operation of the entire analyzer system.

As is evident from the foregoing, according to the present invention, in an automatic analyzer having a plurality of analysis units, it is possible for the entire analyzer system to continue an analysis operation while performing a maintenance operation with respect to a particular analysis unit, with the power source for the particular analysis unit turned off.

## Claims

1. An automatic analyzer, comprising:
a conveying line for conveying a sample supplied from a sample introduction section;
at least one analysis unit for analyzing the sample conveyed by said conveying line;
a sample storage section for storing the sample analyzed by said analysis unit; and
a central control device for comprehensively controlling said sample introduction section, said conveying line, said analysis unit, and said sample storage section,
wherein said central control device has separation means for separating said analysis unit from the control of said central control device.

2. The automatic analyzer according to Claim 1, wherein said central control device comprises the function of turning off the power source for said analysis unit separated from the control of said central control device.

3. The automatic analyzer according to Claim 2, wherein said central control device comprises the function of again turning on the power source for said analysis unit separated from the control of said central control device.

4. An automatic analyzer, comprising:
a conveying line for conveying a sample supplied from a sample introduction section;
at least one analysis unit for analyzing the sample conveyed by said conveying line;
a sample storage section for storing the sample analyzed by said at least one analysis unit;
a central control device for comprehensively controlling said sample introduction section, said conveying line, said at least one analysis unit, and said sample storage section; and
display means for displaying said sample introduction section, said conveying line, said at least one analysis unit, said sample storage section of said automatic analyzer in respective predetermined sections,
wherein said automatic analyzer has a function for specifying any one of the predetermined sections displayed on said display means, thereby separating said specified section from the control of said central control device.

5. The automatic analyzer according to Claim 4, further comprising a function for enabling said specifying any one of the sections displayed on said display means to be repeated, and thereby perform switching between the separation of the specified section from the control of said central control device and the reconnection thereof to said central control device.
